# EUROPÄISCHE PATENTSCHRIFT

(11) **EP 3 427 628 B1**
(45) Veröffentlichungstag und Bekanntmachung des Hinweises auf die Patenterteilung: **04.03.2020**
(21) Anmeldenummer: 18181564.8
(22) Anmeldetag: 04.07.2018
(51) Int. Cl.: A47L 15/00, A47L 15/48, A47L 15/42

(54) **GESCHIRRSPÜLMASCHINE**
DISHWASHER
LAVE-VAISSELLE

(30) Priorität: 12.07.2017 DE 102017115580
(43) Veröffentlichungstag der Anmeldung: 16.01.2019
(73) Patentinhaber: Miele & Cie. KG, 33332 Gütersloh (DE)
(72) Erfinder: Runau, Benjamin, 33611 Bielefeld (DE); Kornfeld, André, 33378 Rheda-Wiedenbrück (DE); Schlief, Martin, 33824 Werther (DE); Dettmer, Martin, 33607 Bielefeld (DE); Nierling, Andreas, 49326 Melle (DE); Schröder, Nils, 33611 Bielefeld (DE); Steinmeier, Ralph, 32052 Herford (DE); Stanke, Benjamin, 33604 Bielefeld (DE); Bertram, Andre, 33609 Bielefeld (DE); Dahms, Tobias, 30519 Hannover (DE)

(56) Entgegenhaltungen:
- EP-A1- 1 721 559
- EP-A2- 2 682 038
- DE-A1- 10 347 244
- DE-U1- 8 915 941

## Beschreibung

Die Erfindung betrifft eine Geschirrspülmaschine, insbesondere eine Haushalts-Geschirrspülmaschine, zur Reinigung von Spülgut in einem Spülraum, aufweisend einen Wärmepumpenkreislauf mit einem Wärmetauscher und einen Ventilator zur Erzeugung eines Luftstroms, der durch den Wärmetauscher führt, wobei ein Luftauslass für den Luftstrom in einem Sockel der Geschirrspülmaschine angeordnet ist.

Zur Senkung des Energieverbrauchs von Geschirrspülmaschinen ist der Einsatz von Wärmepumpen bekannt. Beispielsweise beschreibt die Druckschrift EP 2 682 038 A2 eine Geschirrspülmaschine mit einer Luft-Wasser-Wärmepumpe, die Energie aus der Umgebungsluft entnimmt, um energieintensive Schritte des Spülprogramms, z.B. ein Aufheizen von Spülflüssigkeit, zu unterstützen. Dabei ist in einem Sockel der Geschirrspülmaschine ein Luftkanal mit einem Ventilator ausgebildet, in dem ein Wärmetauscher eines Verdampfers des Wärmepumpenkreislaufs angeordnet ist. Durch den Verdampfer wird der vorbeigeführten Luft Wärme entzogen. Es ist vorgesehen, einen Lufteinlass an der vorderen Seite des Sockels der Geschirrspülmaschine zu positionieren, wobei ein Luftauslass im hinteren Bereich des Sockels nach hinten oder zu einer Seite vorgesehen ist.

Häufig werden Geschirrspülmaschinen in eine Küchenzeile eingebaut, wobei die Küchenzeile nach hinten entweder an eine Raumwand angrenzt oder durch eine Rückwand begrenzt ist. Im hinteren Bereich des Sockels ausgelassene Luft strömt somit zwangsläufig zu einer oder beiden Seiten weg, wobei die Gefahr besteht, dass sie wieder nach vorne in den Ansaugbereich des Lufteinlasses strömt. Auf diese Weise könnte abgekühlte Luft wieder in den Luftkanal gelangen, wodurch die Effizient der Wärmepumpe sinkt.

Der Sockel der Geschirrspülmaschine befindet sich zudem in der Regel hinter einer Sockelleiste der Küchenfront. In diesem Bereich unter den Küchenschränken und Einbaugeräten sammelt sich üblicherweise Hausstaub, der durch den Lufteinlass eingesaugt wird und den Wärmetauscher des Verdampfers zusetzen kann.

Die DE 8915941 U1 offenbart eine Geschirrspülmaschine mit einem Ansaugkanal, dessen Lufteinlassöffnung in einer Vorderseite des Sockels der Geschirrspülmaschine angeordnet ist.

Es ist daher eine Aufgabe der vorliegenden Erfindung, eine Geschirrspülmaschine der eingangs genannten Art bereit zu stellen, bei der die Gefahr eines Eintritts von abgekühlter Luft, die bereits durch den Wärmetauscher geführt wurde, und von stark staubbelasteter Luft verringert ist.

Diese Aufgabe wird gelöst durch eine Geschirrspülmaschine mit den Merkmalen des unabhängigen Anspruchs. Vorteilhafte Ausgestaltungen und Weiterbildungen sind Gegenstand der abhängigen Ansprüche.

Eine erfindungsgemäße Geschirrspülmaschine der eingangs genannten Art zeichnet sich dadurch aus, dass der Luftkanal mit einem Ansaugkanal gekoppelt ist, der mit einer Lufteinlassöffnung über eine Vorderseite des Sockels hinausragt. So wird erreicht, dass Luft nicht unmittelbar im Sockelbereich angesaugt wird. Bei Luft, die nicht unmittelbar aus dem Sockelbereich angesaugt wird, ist die Wahrscheinlichkeit verringert, von dem Luftkanal abgegebene und somit bereits abgekühlte Luft unmittelbar wieder einzusaugen. Entsprechend steigt die Energieeffizienz der Wärmepumpe.

Dabei ragt der Ansaugkanal so weit über die Vorderseite des Sockels hinaus, dass er durch einen Ausschnitt einer Sockelleiste geführt werden kann oder geführt ist. Luft wird dann aus dem Küchenraum angesaugt und nicht aus dem von der Sockelleiste abgeteilten Bereich unter den Schränken oder Geräten der Küchenzeile. Auch die Staubbelastung ist im Küchenbereich geringer als unter der Küchenzeile, wodurch ein Zusetzen des Wärmetauschers mit Hausstaub verhindert oder zumindest verlangsamt wird. Der Ansaugkanal kann dabei eine Blende umfassen oder mit einer Blende gekoppelt sein, die in den Ausschnitt einer Sockelleiste einsetzbar ist.

In einer vorteilhaften Ausgestaltung der Geschirrspülmaschine weist die Lufteinlassöffnung des Ansaugkanals einen flachen und rechteckförmigen Querschnitt auf. Bevorzugt erstreckt sich die Lufteinlassöffnung im Wesentlichen über eine gesamte Breite der Geschirrspülmaschine. Sie hat dadurch auch bei einer geringen Höhe, die sich gut in der Sockelleiste unterbringen lässt, eine ausreichend große Querschnittsfläche, die die Größe eines Luftstroms durch den Luftkanal nicht nachteilig beeinträchtigt.

Weiter bevorzugt ist der Ansaugkanal zweiteilig aufgebaut und weist zwei Abschnitte auf. Mit einem ersten Abschnitt ist der Ansaugkanal mit dem Luftkanal gekoppelt. Ein zweiter Abschnitt ist an einer Seite mit dem ersten Abschnitt gekoppelt und weist an der gegenüberliegenden Seite die Lufteinlassöffnung auf. Bevorzugt hat der zweite Abschnitt einen über seine Länge gleichen Querschnitt. Dadurch kann er in beliebiger Länge abgelängt werden, um den Ansaugkanal an verschiede Einbausituationen anzupassen. Um das Ablängen zu vereinfachen ist der zweite Abschnitt bevorzugt aus einem leicht ablängbaren Material hergestellt, insbesondere einem weichen Kunststoff. Alternativ kann der zweite Abschnitt durch sein Material und/oder seine Formgebung in seiner Länge verändert werden, beispielsweise indem er als ein Falten- oder Wellenbalg ausgebildet ist. So kann - zumindest innerhalb bestimmter Längenbereiche - an die Einbausituation angepasst werden, ohne Werkzeuge zu verwenden. In einer weiteren vorteilhaften Ausgestaltung der Geschirrspülmaschine ist in dem Ansaugkanal und/oder der Blende mindestens ein Filter angeordnet. Der Filter verhindert zusätzlich ein Zusetzen des Wärmetauschers.

Nachfolgendes Betriebsverfahren, welches nicht Bestandteil der beanspruchten Erfindung ist, ist geeignet für eine Geschirrspülmaschine mit einem Wärmepumpenkreislauf mit einem Wärmetauscher, der zusammen mit einem Ventilator in einem Luftkanal angeordnet ist, wobei der Luftkanal mit einem Ansaugkanal gekoppelt ist, der eine Lufteinlassöffnung aufweist. Durch die Lufteinlassöffnung wird in einem regulären Betrieb des Wärmepumpenkreislaufs Luft mithilfe des Ventilators eingesaugt, die dann in dem Wärmetauscher Wärme abgibt. Das Verfahren zeichnet sich dadurch aus, dass in einem Reinigungsschritt, den man auch als Wärmetauscher- und/oder Filter-Reinigungsschritt bezeichnen kann, der Ventilator so betrieben wird, dass Luft durch den Wärmetauscher aus der Lufteinlassöffnung ausgeblasen wird, um den Wärmetauscher oder einen dem Wärmetauscher zugeordneten Filter zu reinigen. Das Verfahren stellt somit einen Reinigungsschritt für den Wärmetauscher oder einen Filter bereit, indem Verunreinigungen durch einen Luftrückstrom entfernt werden können. Eine Abnahme der Energieeffizienz der Wärmepumpe kann so verhindert werden bzw. es können Standzeiten des Filters erhöht werden.

Ein solcher Reinigungsschritt wird vorteilhaft in solchen Abschnitten eines Reinigungsprogramms der Geschirrspülmaschine absolviert, in denen die Wärmepumpe nicht betrieben wird. Vorteilhaft wird der Reinigungsschritt mit einem Luftrückstrom durchgeführt, dessen Volumenstromdichte am Filter gegenüber dem regulären Luftstrom erhöht ist.

In einer vorteilhaften Ausgestaltung des Verfahrens wird der Ventilator in dem Reinigungsschritt gegenüber dem regulären Betrieb mit umgekehrter Drehrichtung und mit einer erhöhten Drehzahl betrieben. Für diese Weiterbildung des Verfahrens werden besonders vorteilhaft außer Steuerungsmitteln für die Drehrichtungsumkehr und die Drehzahl des Ventilators keine zusätzlichen Komponenten benötigt.

In einer weiteren vorteilhaften Ausgestaltung des Verfahrens sind in dem Ansaugkanal Luftleitmittel angeordnet, um Luft gezielt auf Teilbereiche eines Filters zu lenken. Die Luftleitmittel können beispielsweise zwei unabhängig voneinander verschwenkbare Luftleitklappen umfassen. Während des Reinigungsschritts können so Teilbereiche des Filters gezielt mit einem gerichteten und so verstärkten Luftstrom gereinigt werden. Bevorzugt überstreicht der verstärkte Luftstrom in dem Reinigungsschritt ein- oder mehrmals die gesamte Filterfläche, um den Filter zu reinigen.

Die Erfindung wird nachfolgend anhand eines Ausführungsbeispiels mithilfe von Figuren näher erläutert. Die Figuren zeigen:
- Fig. 1: eine schematische Schnittdarstellung einer Geschirrspülmaschine, die unter einer Küchen-Arbeitsplatte eingebaut ist;
- Fig. 2: die Geschirrspülmaschine gemäß Fig. 1 in einer Vorderansicht;
- Fig. 3: eine schematische Vertikalschnittdarstellung eines Luftkanals mit einem Ansaugkanal in einem ersten Ausführungsbeispiel;
- Fig. 4: der Luftkanal des ersten Ausführungsbeispiels, dargestellt in einem Horizontalschnitt;
- Fig. 5: eine schematische Schnittdarstellung eines Wärmetauschers mit einem Ansaugkanal in einem zweiten Ausführungsbeispiel;
- Fig. 6: eine schematische Schnittdarstellung der Geschirrspülmaschine der Fig. 1 während eines erfindungsgemäßen Betriebsverfahrens; und
- Fig. 7a-c: jeweils eine schematische Schnittdarstellung eines Wärmetauschers mit einem Ansaugkanal der Geschirrspülmaschine nach Fig. 6 in verschiedenen Stadien des Betriebsverfahrens.

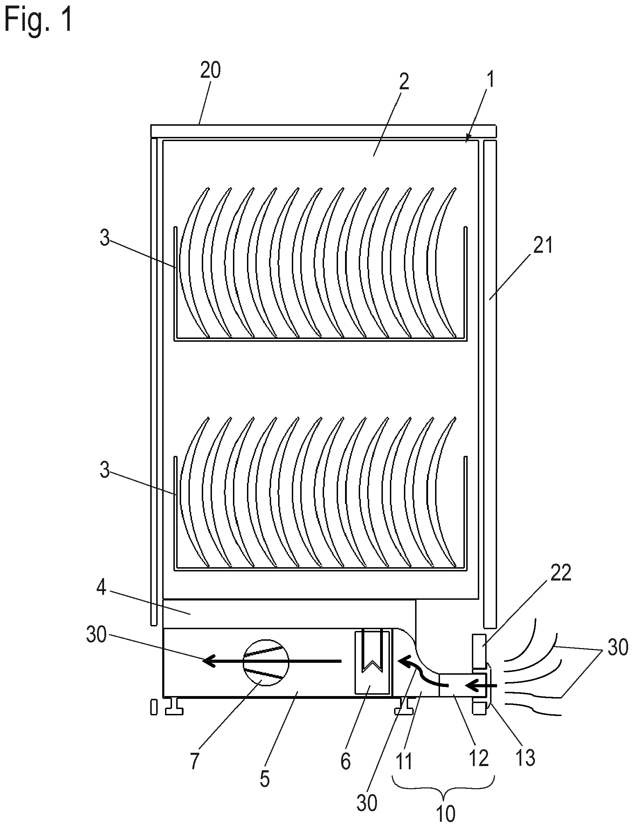

In Fig. 1 ist eine Geschirrspülmaschine 1 in einem schematischen Schnittbild dargestellt. Der Schnitt ist in einer vertikalen Ebene ausgeführt, die senkrecht zu einer Front 21 der Geschirrspülmaschine 1 verläuft.

Die Geschirrspülmaschine 1 weist einen Spülraum 2 auf, in den Spülgut eingeräumt werden kann und in dem Spülflüssigkeit zur Reinigung des Spülguts versprüht wird. Beispielhaft sind zwei Spülgutträger 3 mit Spülgut dargestellt. Zum Versprühen der Spülflüssigkeit sind beispielsweise rotierende Sprüharme vorhanden, die aus Gründen der Übersichtlichkeit hier nicht gezeigt sind. Vom Spülgut oder Wänden des Spülraums 2 abtropfende Spülflüssigkeit sammelt sich in einem Spülsumpf in einem unteren Bereich des Spülraums 2. Von dort wird die Spülflüssigkeit über eine Umwälzpumpe mit Druck beaufschlagt wieder im Spülraum 2 zur Reinigung eingesetzt, wodurch ein Spülkreislauf gebildet ist. Ein Sammeltopf des Spülsumpfs ist ebenso wie die Umwälzpumpe in einem Sockel 4 der Geschirrspülmaschine 1 unterhalb des Spülraums 2 angeordnet.

Die Geschirrspülmaschine 1 ist in einem eingebauten Zustand unterhalb einer (Küchen-) Arbeitsplatte 20 dargestellt. Der Spülraum 2 der Geschirrspülmaschine 1 ist von vorne über eine schwenkbare Tür zugänglich, auf die die (Möbel-) Front 21 aufgesetzt ist, um der Küchenzeile, in die die Geschirrspülmaschine 1 eingebaut ist, ein einheitliches Erscheinungsbild zu geben. Unterhalb der Front 21 und dieser gegenüber ohne Beschränkung der Allgemeinheit leicht zurückversetzt verläuft eine Sockelleiste 22. Diese erstreckt sich in der Regel entlang der gesamten Küchenzeile, in die die Geschirrspülmaschine 1 eingebaut ist.

Der Sockel 4 weist die gleiche Breite auf, die die Geschirrspülmaschine 1 auch im oberen Bereich hat. Auch nach hinten kann der Sockel ebenso weit reichen wie die Geschirrspülmaschine 1 im Bereich ihres Spülraums 2. Im vorderen Bereich ist der Sockel gegenüber dem Spülraum 2 nach hinten zurückversetzt. In den entstehenden Freiraum schwenkt typischerweise eine untere Kante der Tür der Geschirrspülmaschine 1 bzw. der daraufgesetzten Front 21 ein.

Im Sockel 4 verläuft von vorne nach hinten ein Luftkanal 5, in dem ein Wärmetauscher 6 eines Verdampfers und ein Ventilator 7 angeordnet sind. Der Verdampfer ist Teil eines weiter nicht dargestellten Wärmepumpenkreislaufs, durch den Wärme aus der Umgebung, insbesondere der Umgebungsluft, also der Raumluft aus dem Aufstellungsraum der Geschirrspülmaschine, aufgenommen wird und zum Aufheizen der Spülflüssigkeit eingesetzt wird.

Nach vorne ist dem Luftkanal 5 ein Ansaugkanal 10 vorgesetzt, der vorliegend zweiteilig ausgebildet ist und einen ersten Abschnitt 11 und einen zweiten Abschnitt 12 aufweist. Der zweite Abschnitt 12 geht in eine Blende 13 über, die in eine Öffnung in der Sockelleiste 22 eingesetzt ist.

In der Fig. 1 verdeutlichen Pfeile und Strömungslinien einen sich im Betrieb des Ventilators 7 einstellenden Luftstrom 30. Luft wird im Bereich vor der Geschirrspülmaschine 1 angesaugt und gelangt durch die Blende 13 und eine Lufteinlassöffnung in den Ansaugkanal 10, der sie in den den Luftkanal 5 leitet. Im dargestellten Beispiel ist der Ventilator 7 dem Wärmetauscher 6 im Luftstrom 30 nachgeordnet. Eine umgekehrte Anordnung von Ventilator 7 und Wärmetauscher 6 ist ebenso möglich.

Wieder abgegeben wird die angesaugte Luft in einem hinteren Bereich des Luftkanals 5, etwa entweder nach hinten oder zur Seite. Das Ansaugen der Luft aus einem Bereich vor der Sockelleiste 22 verhindert dabei, dass die vom Luftkanal 5 abgegebene Luft unmittelbar wieder in den Ansaugkanal 10 eingesogen werden kann. Zudem ist die vor der Sockelleiste 22 eingesogene Luft in der Regel weniger staubbelastet als Luft hinter der Sockelleiste 22, also aus einem Bereich unter den Küchenschränken, in dem nicht gesaugt oder gewischt werden kann und sich folglich Hausstaub im Laufe der Zeit ansammelt.

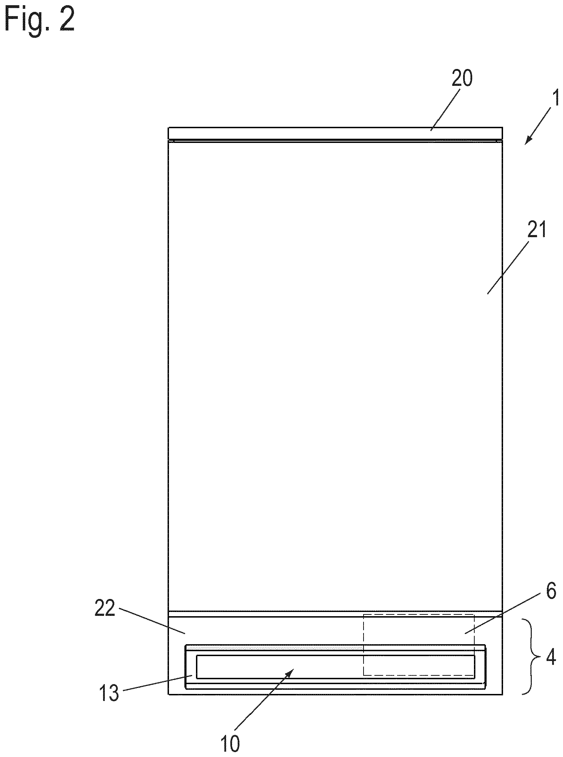

Fig. 2 zeigt die Geschirrspülmaschine 1 der Fig. 1 in einer Draufsicht auf die Vorderseite. Sich seitlich anschließende Geräte und/oder Küchenschränke sind nicht wiedergegeben. In der Figur ist gut die sich in der Breite über die im Wesentlichen gesamte Breite der Geschirrspülmaschine 1 erstreckende Blende 13 zu erkennen, die die Lufteinlassöffnung des Ansaugkanals 10 definiert. In der Höhe nimmt die Blende 13 etwa die untere Hälfte der Sockelleiste 22 ein. Die Höhe der Sockelleiste 22 hängt von der Montagehöhe der Arbeitsplatte 20 ab. Bei geringerer Montagehöhe der Arbeitsplatte 20 kann die Sockelleiste im oberen Bereich gekürzt sein.

Der Querschnitt des Wärmetauschers 6 ist gestrichelt eingezeichnet. Er ist weniger breit als der Ansaugkanal 10, dafür höher. Dieses ist dem zur Verfügung stehenden Einbauraum im Sockel 4 geschuldet. Im Sockel 4 ist zentral der zuvor genannte Sammeltopf für die Spülflüssigkeit positioniert, so dass der Wärmetauscher 6 nur in einem Seitenbereich Platz findet.

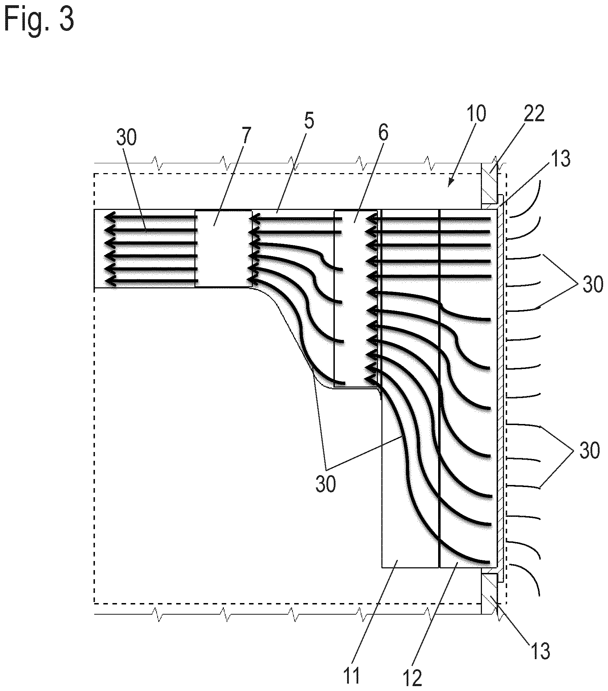

Fig. 3 zeigt einen Horizontalschnitt durch die Anordnung aus Luftkanal 5, Ansaugkanal 10 und Blende 13. In dieser Darstellung ist zu erkennen, dass sich der Luftkanal 5 aus den genannten Platzgründen nach hinten zwischen dem Wärmetauscher 6 und dem Ventilator 7 verschmälert.

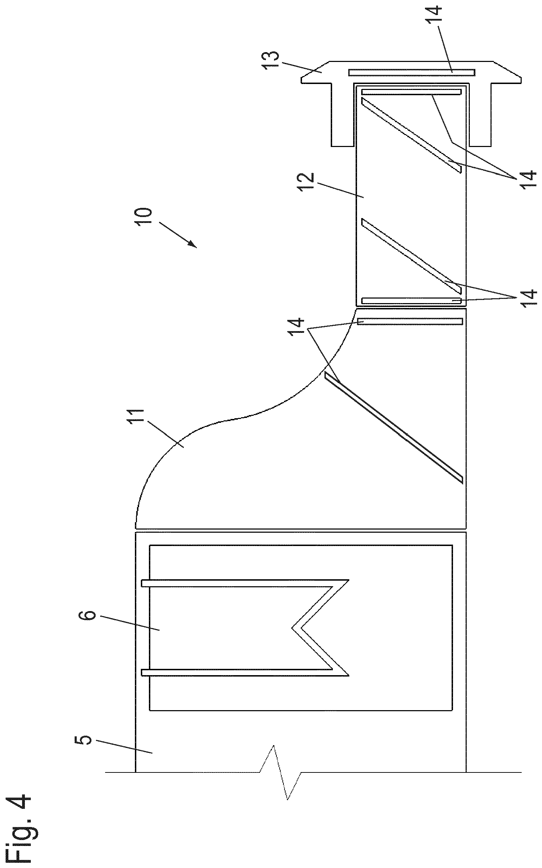

In Fig. 4 ist ein Vertikalschnitt durch die Anordnung aus Luftkanal 5, Ansaugkanal 10 und Blende 13 dargestellt. Hier ist die Vergrößerung des Querschnitts in vertikaler Richtung zu erkennen. Die Höhe des Querschnitts ist zunächst im zweiten Abschnitt 12 des Ansaugkanals 10 gleichbleibend und vergrößert sich dann innerhalb des ersten Abschnitts 11 auf die Höhe des Luftkanals 5. Die gesamte Höhenaufweitung erfolgt also innerhalb des ersten Abschnitts 11. Am Übergang zwischen den beiden Abschnitten 11 und 12 hat der zweite Abschnitt 12 den gleichen Querschnitt wie am Übergang zur Blende 13.

Diese zweiteilige Ausbildung des Ansaugkanals 10 ist vorteilhaft, um den Ansaugkanal 10 in seiner Länge an unterschiedliche Abstände zwischen der vorderen Seite des Sockels 4 und der Sockelleiste 22 anzupassen. Dieser Abstand variiert mit der Einbausituation der Geschirrspülmaschine 1 und hängt von der Größe des Rücksprungs zwischen der Front 21 und der Sockelleiste 22 ab. Diese Größe wiederum ist u.a. von den in der Küchenzeile eingebauten Schränken und Geräten abhängig. Aufgrund des gleichbleibenden Querschnitts des zweiten Abschnitts 12 kann dessen Länge verändert werden und an den Abstand zwischen der vorderen Seite des Sockels 4 und der Sockelleiste 22 angepasst werden, ohne dass das die Blende 13 und die Größe des Ausschnitts in der Sockelleiste 22, in den die Blende 13 eingesetzt ist, beeinflussst.

Um alle üblicherweise auftretenden Einbausituationen abdecken zu können, steht der Ansaugkanal 10 in seiner maximalen Länge bevorzugt um bis zu 100 mm (Millimetern) nach vorne über den Sockel 4 hervor. Die Höhe des zweiten Abschnitts 12 (und damit der Lufteinlassöffnung) liegt bevorzugt zwischen 25 und 40 mm. In der Breite erstreckt sich der zweite Abschnitt 12 und damit die Lufteinlassöffnung bevorzugt über die im Wesentlichen gesamte Breite der Geschirrspülmaschine 1 von in der Regel knapp 600 mm. Die Querschnittsfläche der Lufteinlassöffnung ist bevorzugt größer gewählt als die Querschnittsfläche des Wärmetauschers 6, so dass der Ansaugkanal 10 den maximalen Luftstrom durch den Luftkanal 5 nicht beeinträchtigt. Falls ein Filter 14 verwendet wird, ist bevorzugt die Querschnittsfläche der Lufteinlassöffnung so gewählt, dass sie größer ist als die doppelte Querschnittsfläche des Wärmetauschers 6, um den Einfluss eines Strömungswiderstands des Filters 14 möglichst klein zu halten. Die angegebene bevorzugte Höhe des zweiten Abschnitts 12 zwischen 25 und 40 mm führt dann zu einer Querschnittsfläche der Lufteinlassöffnung von 150 cm² (Quadratzentimetern) bis zu 240 cm².

Zur Reinigung der angesaugten Luft kann ein Filter 14 oder können mehrere Filter 14 in dem Luftstrom 30 angeordnet sein. Dieser kann bzw. diese können insbesondere als Flächen- oder als Tiefenfilter ausgeführt sein. Fig. 4 zeigt eine Mehrzahl alternativer Positionen für den oder die Filter 14. Der Filter 14 kann in der Blende 13 und in dem ersten und/oder zweiten Abschnitt 11, 12 des Ansaugkanals 10 eingesetzt sein. Zur Erzielung einer größeren Filterfläche kann ein etwa als Flächenfilter ausgebildeter Filter 14 gegenüber dem Luftstrom 30 schräg gestellt und/oder gewölbt oder plissiert sein. Durch den oder die Filter 14 wird ein Zusetzen des Wärmetauschers 6 weiter verhindert.

Zur Variation der Länge des zweiten Abschnitts 12 kann dieser zum einen in unterschiedlichen Längen vorgehalten werden. Alternativ oder zusätzlich kann der zweite Abschnitt 12 aus einem leicht ablängbaren und/oder flexiblem Material hergestellt sein, beispielsweise einem weichen Kunststoff.

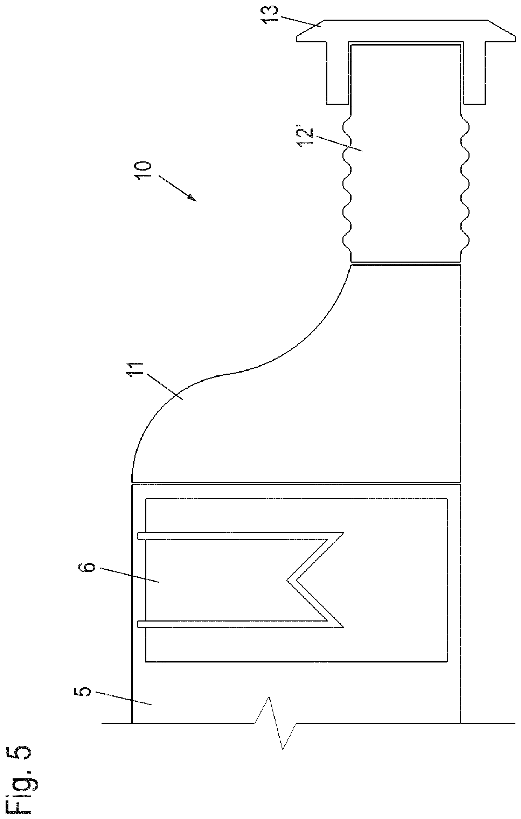

Fig. 5 ein zweites Ausführungsbeispiel eines Ansaugkanals 10 in gleicher Darstellungsart wie Fig. 4. Gleiche Bezugszeichen kennzeichnen in dieser Ausgestaltung gleiche oder gleich wirkende Elemente wie beim ersten Ausführungsbeispiel. Der in Fig. 5 gezeigte Ansaugkanals 10 könnte anstelle des zuvor gezeigten in der in den Fig. 1 und 2 gezeigten Geschirrspülmaschine 1 eingesetzt werden.

Bei dem Ausführungsbeispiel der Fig. 5 ist der zweite Abschnitt 12' des Ansaugkanals 10 durch geeignete Materialwahl und eine Wellenformgebung seiner Wandungen elastisch ausgebildet, so dass er ohne Ablängen innerhalb eines bestimmten Bereichs in seiner Länge variiert werden kann. Es wird angemerkt, dass auch bei diesem Ausführungsbeispiel Filter analog zu den Filtern 14 gemäß Fig. 4 verwendet werden können.

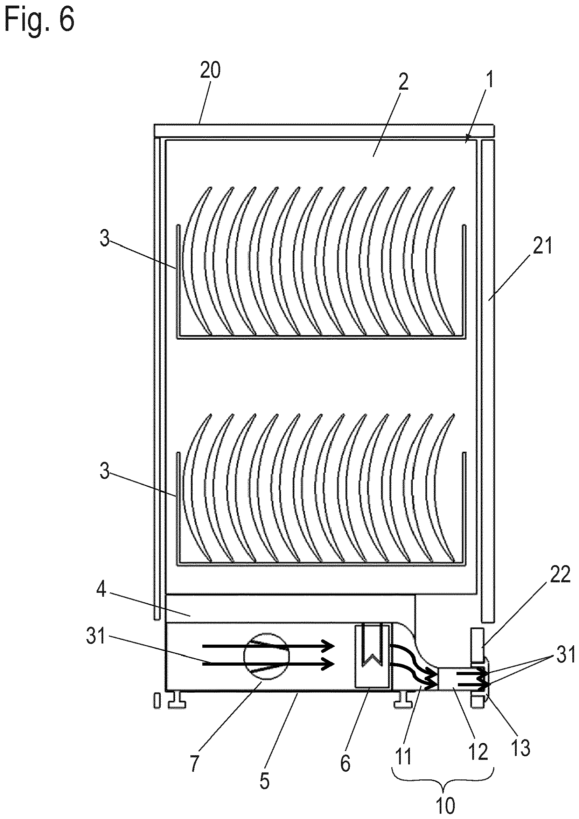

In Fig. 6 ist ein erfindungsgemäßes Betriebsverfahren der Geschirrspülmaschine 1 dargestellt. Die Geschirrspülmaschine 1 entspricht der in Fig. 1 gezeigten und ist hier in gleicher Weise wie in Fig. 1 wiedergegeben.

Im Unterschied zu dem regulären Betrieb der Wärmepumpe wird in dem in Fig. 6 gezeigten Zustand der Ventilator 7 mit umgekehrter Laufrichtung betrieben, so dass ein Luftrückstrom 31 von hinten nach vorne durch den Luftkanal 5 und den Ansaugkanal 10 führt. Durch den Luftrückstrom 31 werden Verunreinigungen, die sich auf dem Filter 14 abgesetzt haben, entfernt und wieder in den Raum geblasen. In einer Ausgestaltung der Geschirrspülmaschine 1, in der kein Filter 14 eingesetzt wird, kann der Luftrückstrom 31 eingesetzt werden, um Verunreinigungen zu entfernen, die sich auf dem Wärmetauscher 6 abgesetzt haben.

Ein derartiger Reinigungsschritt wird vorteilhaft in solchen Abschnitten eines Reinigungsprogramms der Geschirrspülmaschine 1 absolviert, in denen die Wärmepumpe nicht betrieben wird. Vorteilhaft wird der Reinigungsschritt mit einem Luftrückstrom 31 durchgeführt, dessen Volumenstromdichte am Filter gegenüber dem regulären Luftstrom 30 erhöht ist. Eine Möglichkeit zur Erzielung einer erhöhten Volumenstromdichte stellt eine Erhöhung des Volumenstroms durch den Ventilator 7 dar. Der Ventilator 7 kann dann beispielsweise in dem Reinigungsschritt in der anderen Drehrichtung mit einer höheren Drehzahl betrieben werden.

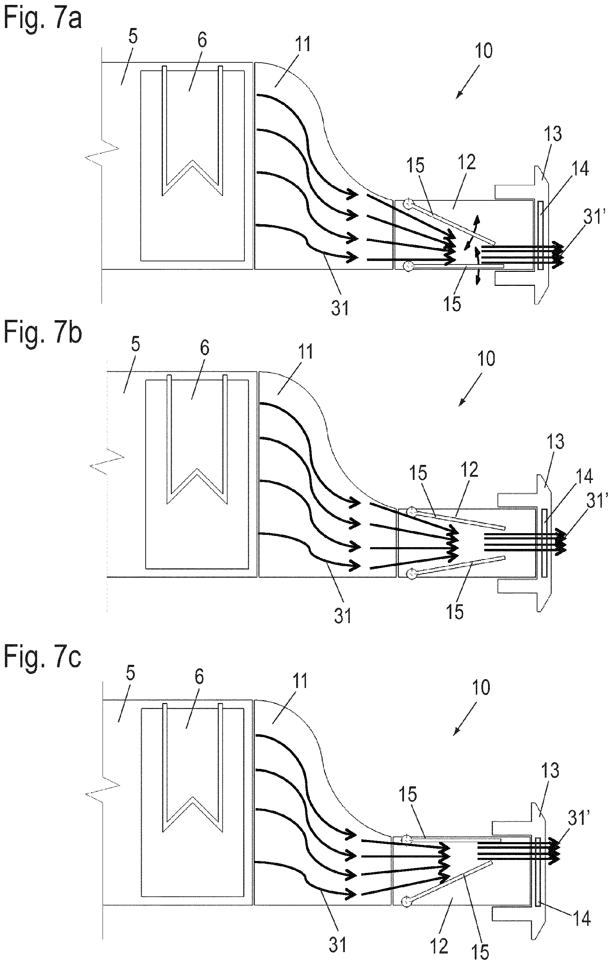

Eine alternativ oder zusätzlich zur Drehzahlerhöhung einsetzbare Möglichkeit zur Erhöhung der Volumenstromdichte im Reinigungsschritt ist in den Fig. 7a bis 7c dargestellt. Die Figuren zeigen eine Weiterbildung des Ansaugkanals 10 der Fig. 4 in verschiedenen Betriebszuständen. Bei dieser Weiterbildung sind in dem zweiten Abschnitt 12 des Ansaugkanals 10 zwei sich über die gesamte Breite des zweiten Abschnitts 12 erstreckende schwenkbare Luftleitklappen 15 angeordnet. Eine der Luftleitklappen 15 hat ihre Schwenkachse im oberen Bereich des zweiten Abschnitts 12, die andere im unteren Bereich. Beide Schwenkachsen liegen in Richtung des (regulären) Luftstroms 30 gesehen hinten an den Luftleitklappen 15.

In einem regulären Betrieb der Wärmepumpe sind die Luftleitklappen 15 parallel zueinander und parallel zum Luftstrom 30 gestellt, so dass sie den Luftstrom im Wesentlichen nicht beeinflussen.

Während des Reinigungsschritts werden die Luftleitklappen 15 aufeinander zu geschwenkt, wie in den Fig. 7a-c dargestellt ist. Der Querschnitt des Luftrückstroms 31 wird entsprechend verkleinert, so dass ein verdichteter Luftrückstrom 31' auf den Filter 14 geleitet wird, durch den der Filter 14 effektiv gereinigt wird. Um mit dem verdichteten Luftrückstrom 31' die gesamte Filteroberfläche zu erreichen, werden die Luftleitklappen 15 synchron verschwenkt. Momentaufnahmen einer solchen Abfolge sind in den Fig.7a-c wiedergegeben. Innerhalb eines Reinigungsschritts kann die Filteroberfläche auf diese Art ein- oder mehrfach von dem verdichteten Luftrückstrom 31' überstrichen werden.

### Bezugszeichen

- 1: Geschirrspülmaschine
- 2: Spülraum
- 3: Spülgutträger
- 4: Sockel
- 5: Luftkanal
- 6: Wärmetauscher
- 7: Ventilator

- 10: Ansaugkanal
- 11: erster Abschnitt
- 12: zweiter Abschnitt
- 12': flexibler zweiter Abschnitt
- 13: Blende
- 14: Filter
- 15: Luftleitklappe

- 20: Arbeitsplatte
- 21: Front
- 22: Sockelleiste

- 30: Luftstrom
- 31: Luftrückstrom
- 31': verdichteter Luftrückstrom

## Patentansprüche

1. Geschirrspülmaschine (1) zur Reinigung von Spülgut mit Spülflüssigkeit in einem Spülraum (2), aufweisend einen Wärmepumpenkreislauf, durch den Wärme aus der Raumluft aus dem Aufstellungsraum der Geschirrspülmaschine aufgenommen wird und zum Aufheizen der Spülflüssigkeit eingesetzt wird und der einen Verdampfer mit einem Wärmetauscher (6) aufweist welcher Wärmetauscher (6) zusammen mit einem Ventilator (7) in einem Luftkanal (5) angeordnet ist, wobei wobei die Geschirrspülmaschine ferner einen unterhalb des Spülraums (2) angeordneten Sockel (4) aufweist, und der Luftkanal (5) im Sockel (4) der Geschirrspülmaschine (1) von vorne nach hinten verläuft und in seinem hinteren Bereich einen Luftauslass aufweist, **dadurch gekennzeichnet, dass** der Luftkanal (5) nach vorne mit einem Ansaugkanal (10) gekoppelt ist, der mit einer Lufteinlassöffnung so weit über eine Vorderseite des Sockels (4) hinausragt, dass er durch einen Ausschnitt einer vor dem Sockel (4) befindliche Sockelleiste (22) einer Küchenfront geführt werden kann.

2. Geschirrspülmaschine (1) nach Anspruch 1, bei der der Ansaugkanal (10) eine Blende (13) umfasst, die in den Ausschnitt einer Sockelleiste (22) einsetzbar ist.

3. Geschirrspülmaschine (1) nach einem der Ansprüche 1 bis 2, bei der die Lufteinlassöffnung des Ansaugkanals (10) einen flachen und rechteckförmigen Querschnitt aufweist.

4. Geschirrspülmaschine (1) nach einem der Ansprüche 1 bis 3, bei der sich die Lufteinlassöffnung im Wesentlichen über eine gesamte Breite der Geschirrspülmaschine (1) erstreckt.

5. Geschirrspülmaschine (1) nach einem der Ansprüche 1 bis 4, bei der der Ansaugkanal (10) zwei Abschnitte (11, 12) aufweist, einen ersten Abschnitt (11), mit dem der Ansaugkanal (10) mit dem Luftkanal (5) gekoppelt ist, und einen zweiten Abschnitt (12, 12'), der an einer Seite mit dem ersten Abschnitt (11) gekoppelt ist und der an der gegenüberliegenden Seite die Lufteinlassöffnung aufweist.

6. Geschirrspülmaschine (1) nach Anspruch 5, bei der der zweite Abschnitt (12, 12') einen über seine Länge gleichen Querschnitt aufweist.

7. Geschirrspülmaschine (1) nach einem der Ansprüche 4 bis 6, bei der der zweite Abschnitt (12') durch sein Material und/oder seine Formgebung in seiner Länge verändert werden kann,
und/oder bei der der zweite Abschnitt (12') ein Falten- oder Wellenbalg ist.

8. Geschirrspülmaschine (1) nach einem der Ansprüche 1 bis 7, bei der in dem Ansaugkanal (10) und/oder der Blende (13) mindestens ein Filter (14) angeordnet ist.

9. Geschirrspülmaschine (1) nach Anspruch 8, bei in dem Ansaugkanal (10) Luftleitmittel angeordnet sind, um Luft gezielt auf Teilbereiche des Filters (14) zu lenken.

10. Geschirrspülmaschine (1) nach Anspruch 9, bei in dem die Luftleitmittel zwei unabhängig voneinander verschwenkbare Luftleitklappen (15) umfassen.

## Claims

1. Dishwasher (1) for cleaning washware using dishwashing liquid in a washing compartment (2), having a heat pump circuit through which heat from the room air from the installation space of the dishwasher is taken up and used to heat the dishwashing liquid and which has an evaporator having a heat exchanger (6), which heat exchanger (6) is arranged, together with a fan (7), in an air duct (5), the dishwasher also having a base (4) arranged below the washing compartment (2), and the air duct (5) extending, in the base (4) of the dishwasher (1), from the front to the rear and having an air outlet in the rear region thereof, **characterised in that** the air duct (5) is coupled to an intake duct (10) towards the front, which intake duct, together with an air inlet opening, protrudes so far beyond a front of the base (4) that it can be guided through a cut-out in a baseboard (22) of a kitchen cabinet, which baseboard is located in front of the base (4).

2. Dishwasher (1) according to claim 1, wherein the intake duct (10) comprises a cover (13) which can be inserted into the cut-out in a baseboard (22).

3. Dishwasher (1) according to either claim 1 or claim 2, wherein the air inlet opening of the intake duct (10) has a flat and rectangular cross section.

4. Dishwasher (1) according to any of claims 1 to 3, wherein the air inlet opening extends substantially over an entire width of the dishwasher (1).

5. Dishwasher (1) according to any of claims 1 to 4, wherein the intake duct (10) has two portions (11, 12), namely a first portion (11) by means of which the intake duct (10) is coupled to the air duct (5), and a second portion (12, 12') which is coupled at one end to the first portion (11) and which has the air inlet opening at the opposite end.

6. Dishwasher (1) according to claim 5, wherein the second portion (12, 12') has a cross section that is uniform over the length thereof.

7. Dishwasher (1) according to any of claims 4 to 6, wherein the second portion (12') can be varied in length by the material and/or the shape thereof, and/or wherein the second portion (12') is a pleated or corrugated bellows.

8. Dishwasher (1) according to any of claims 1 to 7, wherein at least one filter (14) is arranged in the intake duct (10) and/or in the cover (13).

9. Dishwasher (1) according to claim 8, wherein air guiding means are arranged in the intake duct (10) in order to direct air in a targeted manner to sub-regions of the filter (14).

10. Dishwasher (1) according to claim 9, wherein the air guiding means comprise two air guiding flaps (15) which can be pivoted independently of one another.

## Revendications

1. Lave-vaisselle (1) pour le nettoyage de la vaisselle comprenant un liquide de lavage dans un espace de lavage (2), comportant un circuit de pompe à chaleur, au moyen duquel la chaleur de l'air ambiant provenant de l'espace d'installation du lave-vaisselle est absorbée et permet de chauffer le liquide de lavage et ledit circuit de pompe à chaleur comporte un évaporateur doté d'un échangeur de chaleur (6), lequel échangeur de chaleur (6) est disposé conjointement avec un ventilateur (7) dans un conduit d'air (5), le lave-vaisselle comportant en outre un socle (4) disposé sous l'espace de lavage (2), et le conduit d'air (5) dans le socle (4) du lave-vaisselle (1) s'étend de l'avant vers l'arrière et présente une sortie d'air dans sa zone arrière, **caractérisé en ce que** le conduit d'air (5) est accouplé à un conduit d'aspiration (10) à l'avant, lequel conduit d'aspiration fait saillie conjointement avec une ouverture d'entrée d'air aussi loin d'un côté avant du socle (4) de sorte qu'il peut être guidé à travers une découpe d'une plinthe (22) d'une façade de cuisine se trouvant devant le socle (4).

2. Lave-vaisselle (1) selon la revendication 1, dans lequel le conduit d'aspiration (10) comprend un couvercle (13) pouvant être inséré dans la découpe d'une plinthe (22).

3. Lave-vaisselle (1) selon l'une des revendications 1 à 2, dans lequel l'ouverture d'entrée d'air du conduit d'aspiration (10) comporte une section transversale plate et rectangulaire.

4. Lave-vaisselle (1) selon l'une des revendications 1 à 3, dans lequel l'ouverture d'entrée d'air s'étend sensiblement sur toute la largeur du lave-vaisselle (1).

5. Lave-vaisselle (1) selon l'une des revendications 1 à 4, dans lequel le conduit d'aspiration (10) comporte deux sections (11, 12), une première section (11) par laquelle le conduit d'aspiration (10) est accouplé au conduit d'air (5), et une seconde section (12, 12') qui est accouplée à la première section (11) sur un côté et qui présente l'ouverture d'entrée d'air sur le côté opposé.

6. Lave-vaisselle (1) selon la revendication 5, dans lequel la seconde section (12, 12') comporte une section transversale qui est identique sur sa longueur.

7. Lave-vaisselle (1) selon l'une des revendications 4 à 6, dans lequel la seconde section (12') peut être modifiée en longueur par son matériau et/ou sa forme, et/ou dans lequel la seconde section (12') est un soufflet à plis ou un soufflet ondulé.

8. Lave-vaisselle (1) selon l'une des revendications 1 à 7, dans lequel au moins un filtre (14) est disposé dans le conduit d'aspiration (10) et/ou le couvercle (13).

9. Lave-vaisselle (1) selon la revendication 8, dans lequel des moyens de guidage d'air sont disposés dans le conduit d'aspiration (10) afin de diriger l'air de manière ciblée sur des zones partielles du filtre (14).

10. Lave-vaisselle (1) selon la revendication 9, dans lequel les moyens de guidage d'air comprennent deux volets de guidage d'air (15) pouvant pivoter indépendamment.
